# EUROPEAN PATENT SPECIFICATION

(11) **EP 2 185 359 B1**
(45) Date of publication and mention of the grant of the patent: **02.01.2019**
(21) Application number: 08798697.2
(22) Date of filing: 26.08.2008
(51) Int. Cl.: B32B 27/36, B65D 77/20, B65D 81/34, C08J 7/04

(54) **DUAL OVENABLE VACUUM SKIN PACKAGED SEALED CONTAINER COMPRISING A RECEPTACLE CONTAINING A FOOD PRODUCT AND A SEALED THERMOFORMABLE POLYESTER FILM LID**
OFEN- UND MIKROWELLENGEEIGNETER VAKUUMFOLIENVERPACKTER BEHÄLTER MIT EINEM NAHRUNGSMITTEL ENTHALTENDEN GEFÄSS UND EINEM WÄRMEFORMBAREN POLYESTERFILM-DECKEL
RÉCIPIENT EMBALLÉ SOUS-VIDE POUR ALIMENT DOUBLE ALLANT AU FOUR COMPRENANT UN RÉCEPTACLE CONTENANT DES PRODUITS ALIMENTAIRES ET UN COUVERCLE EN FILM DE POLYESTER THERMOFORMABLE

(30) Priority: 30.08.2007 US 967082 P
(43) Date of publication of application: 19.05.2010
(73) Proprietor: DUPONT TEIJIN FILMS U.S. LIMITED PARTNERSHIP, Wilmington, Delaware 19805 (US)
(72) Inventor: DENG, Fenghua, Richmond, VA 23233 (US); FRANZYSHEN, Stephen, K., Richmond, VA 23236 (US)
(74) Representative: Cockerton, Bruce Roger
(86) International application number: PCT/US2008/074308
(87) International publication number: WO 2009/032627

(56) References cited:
- EP-A2- 0 334 670
- WO-A1-2007/093798
- WO-A1-2008/053205
- US-A1- 2005 100 729
- US-B1- 6 623 821

## Description

### FIELD OF THE INVENTION

This invention relates to a vacuum skin food package for use in both microwave and conventional ovens, and more particularly to a food package able to withstand temperatures in excess of 425°F (218°C), comprising a thermoformable polyester film lid.

### BACKGROUND OF THE INVENTION

Plastic containers have been increasingly used in packaging applications, such as food packaging, and in particular for "cook-in" packaging convenience foods, for example ready-prepared ovenable meals which may be warmed either in a microwave oven or in a conventional oven or in either. Today, busy consumers are demanding higher quality products, easier-to-use-packaging and faster, and more efficient cooking methods to achieve more flexibility in the kitchen. The ability to cook food in either a conventional or microwave oven has become a practical necessity.

Vacuum skin packaging is a known packaging process in which after food is placed in a container, air is drawn from the package prior to sealing it close. Such packaging has better storage and food preservation characteristics than simple film wrapping methods, including simple, non-vacuum shrink wrapping.

"Cook-in" packaging is packaging in which a food product is non-cooked or precooked and shipped to the wholesaler, retailer or consumer. Cook-in packaging may comprise a tray within which is disposed the food product and a polymeric lidding film heat-sealed to the tray, or may comprise a polymeric film or bag which forms the whole of the packaging around the food product. Food packaged in this way may be warmed in a conventional or microwave oven, without the need for the consumer to remove the packaging prior to warming. Thus, it is known to package raw meats in shrinkable polymeric film bags that are shrink-wrapped around the meat, and the consumer cooks the meat while it remains in the packaging. Such "cook-in" packaging is becoming increasingly popular since it reduces the amount of time spent preparing meals and requires little cooking skill from the consumer. Packaging of the type described above has been disclosed in, *inter alia,* U.S. Pat. No. 4820536, U.S. Pat. No. 5552169, U.S. Pat. No. 6623821, U.S. Appln. No. 2003/0021870-A1, WO-2003/061957-A1, WO-02/26493-A1 and WO-03/026892-A1.

The "cook-in" concept is particularly desirable since it avoids the need for the consumer to handle raw meat or fish, which some consumers find disagreeable. Moreover, the handling of raw meat or fish is a growing concern from a food-safety perspective, and a pre-packaged cook-in food product reduces the risk of contamination. Convenience for the consumer can also be increased since cooking instructions can be provided in association with the packaging. In addition, the pre-packaging of food products can be used as a mechanism of portion control, which is becoming desirable in an increasingly health-conscious market-place. Pre-packaging may also improve consumer convenience by allowing a reduction in the duration of the cook cycle, while ensuring that the packaged food product can be properly and safely cooked by allowing the food contents to achieve a sufficiently high core temperature to kill pathogens and bacteria. It is also important to balance the convenience of cook-in packaging with the taste and texture characteristics of the cooked food product, something better achieved in traditional ovens, and it would also be desirable to provide consumers with seasoned or marinated pre-packaged cook-in food products.

A container which is suitable for use either in a microwave oven or a conventional oven is generally referred to as "dual-ovenable." Often the plastic container is an APET/CPET tray (a composite material having an amorphous polyethylene terephthalate layer on top of a crystalline polyethylene terephthalate layer). Other containers such as CPET trays and aluminium trays are dual ovenable as well. On the other hand, polystyrene and polypropylene containers are only suitable for microwave oven use. The plastic container is generally used in association with a lid which seals the container in order to prevent leakage and drying out of the packaged contents during storage. The lid should not stick to the packaged contents and should be able to withstand the heat generated in the oven.

Such container lids typically comprise a multi-layer film, often referred to as a "lidding film", which comprises a flexible polymeric substrate layer, such as biaxially oriented polyester film, and a heat-sealable layer.

The manufacture of sealed containers using lidding films involves the formation of a seal between the lidding film and the container. This seal is formed by placing the lid on top of the container and applying heat and pressure in order to soften or melt the sealable layer so that it adheres to the surface of the container and forms an effective seal between the lid and the container. Typically, the lidding film is heated and pressed into contact with a lip or flange on the tray containing the food, thereby forming the heat-seal. The softened film is then drawn under vacuum down onto into the cavity of the tray, thus draping and forming itself over the surface of the food. The vacuum is then released.

The resulting seal must be strong enough to prevent leakage of the contents during storage and transportation. The lid is preferably peelable from the container by the consumer, therefore the seal should be strong enough to prevent leakage of the contents but not so strong as to result in difficulties in removing the lid when the container is to be opened.

It is also desirable that the packaging should be such that it does not give the consumer the impression that the packaging has in some way deteriorated as a result of the high temperatures experienced during the cooking cycle. Thus, it is desirable that a clear packaging film does not whiten or become opaque during the cooking cycle.

While there are many food packages on the market using films for packaging food products and reheating in microwave ovens, there is still a need for a vacuum skin food package that provides a secure enclosure for the food both during storage, transportation, and during subsequent heating or cooking not only in microwave ovens but also in conventional ovens, and doing so without objectionable discoloration or other visible change during the cooking cycle. Of course such packaging should employ materials approved by the Food and Drug administration for use in contact with a consumable product throughout the processing cycle, including any pre-cooking, packaging, heat-sealing, storage and eventual cooking steps.

US 2005/100729 A1 describes coextruded, biaxially oriented polyester films which have a base layer and a heat sealable outer later. WO 2007/093798 A1 describes a heat-sealable, peelable, coextruded composite polymeric film. EP 0334670 A2 describes a container, made out of a substantially gas impermeable material. WO 2008/053205 A1 describes a heat-sealable, coextruded composite polymeric film.

### SUMMARY OF THE INVENTION

The invention provides an ovenable vacuum skin packaged sealed container comprising a receptacle containing a food product and a lid heat-sealed to the receptacle, said lid formed from a composite film that comprises:
(i) a thermoformable substrate layer comprising a first copolyester material comprising units of terephthalic acid, azelaic acid, ethylene glycol and diethylene glycol; and
(ii) on a surface of the substrate layer , a heat-sealable layer comprising a second copolyester material, the second copolyester material being different from the first copolyester material;
wherein
i. the receptacle comprises on a surface thereof a sealing region adapted to contact and form a seal with the heat-sealable layer of lid; and
ii. both the receptacle and the lid comply with the requirements of paragraph h(1) of 21 CFR § 177.1630; and
wherein the lid is conformed to the surface of the food product.
In one aspect, the disclosure provides an ovenable vacuum skin package for storage and cooking of a food product. The package includes a receptacle and a thermoformable composite polymeric film cover heat-sealed thereto, and the composite polymeric film cover includes:
(i) a thermoformable substrate layer comprising a first copolyester material; and
(ii) on a surface of the substrate layer, a heat-sealable layer comprising a second copolyester material, the second copolyester material being different from the first copolyester material wherein;
   i. the receptacle comprises on a surface thereof a sealing region adapted to contact and form a seal with the heat-sealable layer; and
   ii. both the receptacle and the cover film comply with the requirements of paragraph h(1) of 21 CFR § 177.1630.

The heat-sealable layer may be co-extruded with the substrate layer, or it may be applied to the substrate layer by coating, such as from a solvent. The heat-sealable layer may include a wax. Additional layers may be provided on a surface of the substrate opposite the heat-sealable layer, including layers containing printing or layers that improve the printing characteristics of the thermoformable substrate surface, protective layers, gloss improving layers etc.

The invention provides a sealed container comprising a receptacle containing a food product, particularly an ovenable meal, and a lid formed from a composite film as defined herein. Once the food to be packaged has been introduced into the receptacle, the heat-sealable film lid is affixed and conformed to the food surface using elevated temperature, sealing head pressure, and vacuum.

The invention provides a packaged, sealed food product, particularly an ovenable meal, wherein the packaging comprises a composite film as defined herein.

The disclosure also provides a packaged, sealed food product, particularly an ovenable meal, wherein the packaging which effects and forms the seal around the food product is a composite film, as defined herein, heat-sealed to itself.

### BRIEF DESCRIPTION OF THE DRAWINGS

Figure 1 is a schematic representation of an elevation cross section of a film useful in the present invention.
Figure 2 is a schematic representation of a vacuum skin package in accordance with the present invention.
Figure 3 is an expanded view of the flange to lid bonding.

### DETAILED DESCRIPTION OF THE INVENTION

The invention will next be described with reference to the Figures wherein same numerals are used to identify same elements in all Figures. The Figures illustrate the invention and are not intended to act as engineering or construction drawings, therefore they are not to scale and do not include all elements that may be included in such drawings, as inclusion of such elements would unduly clutter the drawings.

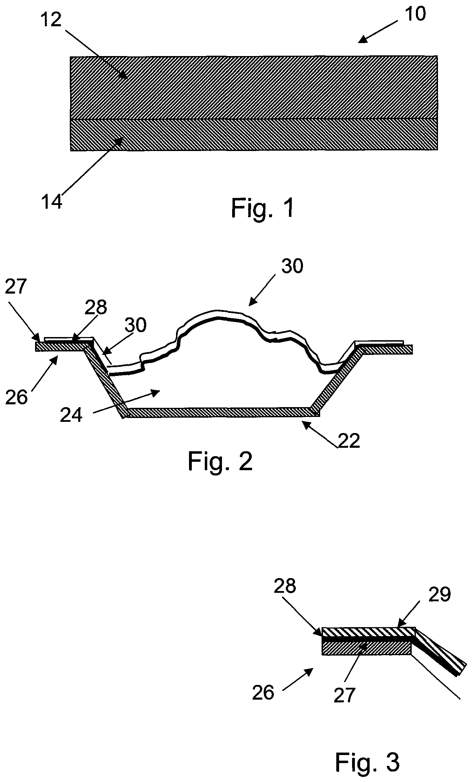

Referring next to Figure 1 there is shown a cross section of a thermoforming heat-sealable composite film useful for producing a lid for use in a vacuum skin package in accordance with the present invention.

The composite film 10 comprises a substrate film layer 12 and a heat-sealable layer 14. Substrate film layer 12 is a thermoformable self supporting polymeric film. A thermoforming process is a process which comprises the steps of heating a film to a temperature (T₁) that is above the glass transition temperature (T_{g}) of the material, and if the material exhibits a crystalline melting temperature (Tₘ), wherein T₁ is below the crystalline melting temperature, and then subjecting the material to deformation, i.e., deforming the material while it is in its softened, rubbery, solid state. A thermoformable film must:
(i) reversibly soften at temperatures above the glass transition temperature (T_{g}) thereof and, if the material exhibits a crystalline melting temperature (Tₘ), below the crystalline melting temperature, in which temperature range the material assumes a rubbery solid state such that it is deformable by an external force; and
(ii) once the film has been cooled below its glass transition point, retain the deformation that was introduced into the film while at a temperature above the glass transition point.

In addition, the elongation (strain) at break (ETB) measured at the thermoforming temperature should be greater than the strains experienced during the thermoforming operation, and the tensile strength at maximum elongation (UTS) measured at the thermoforming temperature should be greater than the yield stress at that temperature.

Suitable thermoformable films are commercially available and the skilled person would be well aware of their methods of manufacture and the characteristics thereof. Thermoformability is indicated by the stress-strain curve above the glass transition temperature of the material (see, for instance, "Thermoforming" by James L. Throne, Pub. Karl Henser Verlag, Munich 1987; ISBN 3-446-14699-7). A thermoformable polymeric film is characterized by a relatively low force required to stretch a film above its Tg and a relatively high extent of stretching, when compared with a standard polymeric film. Assessment of thermoformability is more suitably achieved by measuring one or more of the Young's modulus, the yield stress and the post-yield modulus, particularly the yield stress and the post-yield modulus, of the film at temperatures above Tg, as described hereinbelow. Measurement of these parameters at various temperatures above Tg provides a general indication of the thermoformability of the film. More fundamentally, of course, thermoformability requires that the deformed film retains the deformed shape, once cooled. Accordingly, an important characteristic of a thermoformable film is substantial relaxation of induced stress at the processing temperature after stretching the film to the desired strain. The characteristic is usually expressed as a percentage of stress retained after a defined time period (in seconds), or as the time required to relax stress by a defined percentage, and in a thermoformable film the values of these parameters should be as low as possible.

The crystallinity percentage (X) in a film may also give an indication of the ability of a film to thermoform. In one embodiment, the copolyester substrate has a crystallinity percentage (X) below about 50%, more preferably below about 45%, more preferably in the range from 5 to about 42%, more preferably in the range from 3 to about 40%.

A film-forming thermoplastic copolyester resin constitutes the major component of the substrate layer, and makes up at least 50%, preferably at least 65%, preferably at least 80%, preferably at least 90%, and preferably at least 95% by weight of the total weight of the substrate layer. Such resins are typically synthetic linear copolyesters. Exemplary copolyesters may be obtained by condensing the dicarboxylic acids or their lower alkyl diesters, e.g., terephthalic acid (TA), isophthalic acid, phthalic acid, 2,5-, 2,6- or 2,7-naphthalenedicarboxylic acid, succinic acid, sebacic acid, adipic acid, azelaic acid, 4,4'-diphenyldicarboxylic acid, hexahydro-terephthalic acid or 1,2-bis-p-carboxyphenoxyethane (optionally with a monocarboxylic acid, such as pivalic acid) with one or more glycols, particularly an aliphatic or cycloaliphatic glycol, e.g., ethylene glycol, 1,3-propanediol, 1,4-butanediol, neopentyl glycol, 1,4-cyclohexanedimethanol and/or diethylene glycol. Aliphatic glycols are preferred, and preferably ethylene glycol, optionally with no more than 5 mole % diethylene glycol (relative to the total diol content of the polyester). The copolyester contains at least one aromatic dicarboxylic acid, and preferably this is TA, optionally with an aliphatic dicarboxylic acid which is preferably a saturated aliphatic dicarboxylic acid of the general formula CₙH₂ₙ(COOH)₂ wherein n is 2 to 8, such as azelaic acid.

Preferably, the copolyester of the substrate layer comprises at least 90 mole % relative to the total diacid fraction of the copolyester of an aromatic dicarboxylic acid, and no more than 10 mole % relative to the total diacid fraction of the copolyester of an aliphatic dicarboxylic acid.

The substrate layer may contain recycle material up to a level of 50% by weight of the substrate layer, and preferably at least 10%, more preferably at least 25%, and most preferably at least 40% by weight of the substrate layer. The term "recycle material" means waste material consisting of the composite film of the present invention, and such waste material may be derived from edge-trimming (typically the edge portions of the film which are held by the stenter clips during film manufacture), from excess film left over after the film has been slit along its longitudinal dimension, from start-up film (i.e., the film produced at the start of a manufacturing run), or from film that has been failed for other reasons, as is well-known in the art. It is surprising that recycle material may be used in the substrate layer in such high proportions without causing problems in the film making process, given that it contains the wax from the heat-sealable layer.

The substrate may comprise one or more discrete coextruded layers of the above film-forming materials. The polymeric materials of the respective layers may be the same or different. For instance, the substrate may comprise one, two, three, four or five or more layers and typical multi-layer structures may be of the AB, ABA, ABC, ABAB, ABABA or ABCBA type. Preferably, the substrate comprises one layer.

The heat-sealable layer 12 is a heat-sealable and, preferably, peelable film. As used herein, the term "heat-sealable peelable film" refers to a film which is capable of forming a seal to a surface under the application of heat, wherein the seal is breakable without fracture of the film. The peelable characteristic of the films described herein distinguishes them from high-seal strength or "weldable" films. In such films, the seal is so strong that the film itself may fracture upon efforts to open the container. Peelability is particularly important following the cooking cycle.

A composite film according to the present invention typically exhibits a heat-seal strength (at ambient temperature) in the range of from about 200 to about 2000g/25mm, preferably about 200 to about 1600g/25mm, preferably about 200 to about 1400g/25mm, preferably at least 300g/25mm, preferably at least 400g/25mm, and preferably no more than about 1200g/25mm, more preferably no more than about 1000g/25mm, when sealed to the APET side of a typical APET/CPET tray. In one embodiment, the heat-seal strength is preferably in the range of from about 200 to about 1200g/25mm, and more preferably in the range of from about 400 to about 900 g/25mm when sealed to the APET side of a typical APET/CPET tray. Typical heat-seal strengths of the film to itself are in the range of from about 200 to about 1400g/25mm, preferably in the range of from about 400 to about 600g/25mm.

The strength of the heat-seal bond may be varied in order to achieve the required performance before, during and after the cooking cycle. This may be achieved by varying the chemistry and thickness of the heat-seal layer, as well as the process conditions used to form the heat-seal bond. In a first embodiment, the heat-seal bond is intended to be peelable by the consumer, and the heat-seal bond is sufficiently strong that it is not broken during the storage and transportation , while allowing the consumer to peel the film upon completion of the cooking cycle. In this embodiment, the heat-seal bond strength is typically in the range of 200 to 1800 g/25mm, and preferably at least 300, more preferably at least 400g/25mm, and preferably in the range of 400-1500g/25mm, preferably 400-1200 g/25mm. Preferably. The heat-seal bond ruptures during the cooking cycle, i.e., so that the composite film provides a self-venting packaging. An increase in the pressure within the packaging above a predetermined threshold during the cooking cycle causes rupture of the heat-seal bond, enabling venting to occur through the ruptured heat-seal bond. Variation of the chemistry and thickness of the heat-sealable layer, and/or variation of the heat-seal bond-forming process conditions, as described herein, can provide the manufacturer with control over the time at which the bond fails during the cooking cycle for a fixed and prescribed power input during the cooking cycle. In addition, variation of the package design and the sealing technique can provide the manufacturer with control of the locus of failure within the heat-seal bond, which may be advantageous in preventing undesirable release from the packaging of liquids during the cooking cycle, and/or in allowing an easy and clean opening of the packaging by the consumer once the cooking cycle has finished. Typical cooking cycles in conventional ovens include maximum oven temperatures of at least 350°F (177°C), more typically at least 375°F (191°C), and most typically at least 400°F (204°C). Temperatures of 425°F (218°C) and even higher are sometimes used.

The hot-tack adhesion strength of the film may be adjusted to ensure good performance of the film in use on a tray filling and sealing or lidding line. A film which shows good hot-tack on a filling line has a preferred hot-tack value, measured as described hereinbelow, of at least 3 Newtons, preferably at least 4 Newtons, but preferably no more than about 5 Newtons, and is preferably in the range of from about 3 to about 5 Newtons.

The heat-sealable layer is capable of forming a heat-seal bond to the surfaces of the container, and comprises polymeric material. The polymeric material is the major component of the heat-sealable layer, and makes up at least 50%, preferably at least 65%, preferably at least 80%, preferably at least 90%, and preferably at least 95% by weight of the total weight of the heat-sealable layer. The polymeric material of the heat-sealable layer softens to a sufficient extent that its viscosity becomes low enough to allow adequate wetting for it to adhere to the surface to which it is being bonded. The heat-seal bond is effected by heating to soften the polymeric material of the heat-sealable layer, and applying pressure, without melting the other layers in the film or the receptacle to which it is being sealed. Thus, the polymeric material of the heat-sealable layer begins to soften at a temperature such that the heat-seal bond can be formed at a temperature which is less than the melting temperature of the polymeric material of the substrate. In one embodiment, the polymeric material of the heat-sealable layer should begin to soften at a temperature such that the heat-seal bond can be formed at a temperature which is between about 5 and 50°C below, preferably between about 5 and 30°C below, and even more preferably at least about 10°C below the melting temperature of the polymer material of the substrate. The polymeric material of the heat-sealable layer may be amorphous.

In a preferred embodiment, the heat-sealable layer comprises, and typically consists essentially of, a copolyester resin derived from at least one (and preferably only one) aromatic dicarboxylic acid and at least one (and preferably only one) aliphatic dicarboxylic acid (or their lower alkyl (i.e., up to 14 carbon atoms) diesters) with one or more glycol(s). Formation of the copolyester is conveniently effected in known manner by condensation, or ester-interchange, at temperatures generally up to 275°C. Preferred aromatic dicarboxylic acids include terephthalic acid, isophthalic acid, phthalic acid, and 2,5-, 2,6- or 2,7-naphthalenedicarboxylic acid, and preferably the aromatic dicarboxylic acid is terephthalic acid. Preferred aliphatic dicarboxylic acids are saturated aliphatic dicarboxylic acids of the general formula CₙH₂ₙ(COOH)₂ wherein n is 2 to 8, such as succinic acid, sebacic acid, adipic acid, azelaic acid, suberic acid or pimelic acid, preferably sebacic acid, adipic acid and azelaic acid, and more preferably azelaic acid. In one embodiment, the polyester contains no more than 90% of aromatic dicarboxylic acid (preferably TA) and at least 10% of aliphatic dicarboxylic acid, the percentages being the mole percentage of the total diacid content of the polyester, provided that the copolyesters of the substrate and heat-sealable layers are different, as discussed hereinabove with regard to relative softening temperatures. Preferably, the concentration of the aromatic dicarboxylic acid present in the copolyester is no more than about 80 mole%, and preferably in the range from 45 to 80 mole%, more preferably 50 to 70 mole%, and particularly 55 to 65 mole % based on the dicarboxylic acid components of the copolyester. The concentration of the aliphatic dicarboxylic acid present in the copolyester is at least about 20 mole%, and preferably in the range from 20 to 55, more preferably 30 to 50, and particularly 35 to 45 mole % based on the dicarboxylic acid components of the copolyester. Preferred glycols are aliphatic glycols, and more preferably alkylene glycols. Thus, suitable glycol(s) include aliphatic diols such as ethylene glycol, diethylene glycol, triethylene glycol, propylene glycol, 1,3-butanediol, 1,4-butanediol, 1,5-pentanediol, 2,2-dimethyl-1,3-propanediol, neopentyl glycol and 1,6-hexanediol. Ethylene glycol or 1,4-butanediol is preferred. The manufacture of the heat-sealable layer is typically effected using a single polyester species, rather than a blend of different polyesters.

Preferably, the T_{g} of the copolyester is no more than about 20°C, preferably no more than about 10°C, preferably no more than about 0°C, and preferably no more than about -10°C. In one embodiment, the melting point Tₘ of the copolyester is preferably no more than about 160°C, preferably no more than about 150°C, more preferably no more than about 140°C, and preferably no more than about 130°C.

Particularly preferred examples of such copolyesters are (i) copolyesters of azelaic acid and terephthalic acid with an aliphatic glycol, preferably ethylene glycol; (ii) copolyesters of adipic acid and terephthalic acid with an aliphatic glycol, preferably ethylene glycol; and (iii) copolyesters of sebacic acid and terephthalic acid with an aliphatic glycol, preferably butylene glycol. Exemplary polymers include copolyesters of sebacic acid/terephthalic acid/butylene glycol (preferably having the components in the relative molar ratios of 45-55/55-45/100, more preferably 50/50/100) having a glass transition point (T_{g}) of -40°C and a melting point (Tₘ) of 117°C). Other exemplary copolyesters include azelaic acid/terephthalic acid/ethylene glycol (preferably having the components in the relative molar ratios of 40-50/60-50/100, more preferably 45/55/100) having a T_{g} of -15°C and a Tₘ of 150°C.

The heat-sealable layer may comprise one or more waxes, and typically only one type of wax. The wax may be a natural or synthetic wax, and preferably has a melting point of at least 50°C. Natural waxes are preferably either vegetable waxes (such as carnauba wax) or mineral waxes (such as montan waxes and ozocerite). Paraffin waxes (highly-refined low-molecular weight waxes comprising straight-chain hydrocarbons) may also be used. Examples of synthetic waxes include Fischer-Tropsch waxes (produced by coal gasification, and having a molecular weight in the range from about 300 to about 1400 Daltons), and oxidized and non-oxidized (preferably oxidized) low molecular weight polyethylene waxes (having a molecular weight in the range from about 500 to about 3000 Daltons) as well as the corresponding polypropylene waxes. However, a preferred class of waxes are amide waxes. Amidic waxes are generally immiscible with the base copolyester of the heat-sealable layer. The amide wax may be a primary, secondary, tertiary or bis (fatty) amide, such as oleamide and erucamide. Examples of the different types include primary fatty amides such as erucamide, behenamide, oleamide or stearamide; secondary fatty amides such as stearylerucamide, erucylerucamide, oleylpalmitamide, stearylstearamide or erucylstearamide; tertiary fatty amides such as dimethylstearamide or diethylstearamide; and N,N'-bis (fatty) amides such as N,N'-ethylene bis(stearamide), N,N'-methylene bis(stearamide), N,N'-propylene bis(stearamide), N,N'-ethylene bis(oleamide), N,N'-methylene bis(oleamide), or N,N'-propylene bis(oleamide). Preferably, the wax is selected from N,N'-bis (fatty) amides, and more preferably from N,N'-ethylene bis(oleamide) and N,N'-ethylene bis(stearamide). The wax assists in the manufacture by coextrusion of the composite film comprising the heat-sealable layer referred to above.

In a preferred embodiment, the wax is present at a level of from about 0.1 to about 3 wt%, preferably from about 0.5 to about 3 wt%, preferably no more than 2 wt%, and typically from about 1 to about 2 wt% of the total weight of the heat-sealable layer.

The film may be uniaxially-oriented, but is preferably biaxially-oriented. Orientation may be effected by any process known in the art for producing an oriented film, for example a tubular or flat film process.

In the preferred flat film process, the film-forming polymer is extruded through a slot die and rapidly quenched upon a chilled casting drum to ensure that the polymer is quenched to the amorphous state. Orientation is then effected by stretching the quenched extrudate in at least one direction at a temperature above the glass transition temperature of the substrate polyester. Sequential orientation may be effected by stretching a flat, quenched extrudate firstly in one direction, usually the longitudinal (or machine) direction (MD), i.e., the forward direction through the film stretching machine, and then in the transverse direction (TD). Forward stretching of the extrudate is conveniently effected over a set of rotating rolls or between two pairs of nip rolls, transverse stretching then being effected in a stenter apparatus. Alternatively, the cast film may be stretched simultaneously in both the forward and transverse directions in a biaxial stenter. Stretching is generally effected so that the dimension of the oriented film, particularly a polyester film, is from 2 to 5 times, generally at least 2.5 times, preferably no more than 4.5 times, more typically no more than 4.0 times its original dimension in each direction of stretching. In this invention, the stretch ratio in the machine direction is preferably in the range of from about 2.8 to about 3.7. The stretch ratio in the transverse direction is preferably in the range of from about 3.0 to about 4.0. It is not necessary to stretch equally in the machine and transverse directions although this is preferred if balanced properties are desired.

For the thermo-formable films described herein, the TD stretching temperature is typically in the range of from about 90 to about 110°C, the film having been preheated to a temperature typically in the range of from about 80 to about 95°C. The MD stretching temperature is typically in the range of from about 55°C to about 80°C.

A stretched film may be, and preferably is, dimensionally stabilized by heat-setting under dimensional restraint at a temperature above the glass transition temperature of the substrate polyester but below the melting temperature thereof, to induce crystallisation of the substrate polyester. Heat-setting has the effect of providing dimensional stability to a stretched film, and "locking" the film in its stretched state.

Formation of the composite film may be effected by extrusion, and preferably by co-extrusion of the substrate and heat-sealable layer. Preferably, the composite film of the present invention comprising a substrate and a heat-sealable layer is effected by coextrusion, either by simultaneous coextrusion of the respective film-forming layers through independent orifices of a multi-orifice die, and thereafter uniting the still molten layers, or, preferably, by single-channel coextrusion in which molten streams of the respective polymers are first united within a channel leading to a die manifold, and thereafter extruded together from the die orifice under conditions of streamline flow without intermixing thereby to produce a multi-layer polymeric film, which may be oriented and heat-set as hereinbefore described.

One or more of the layers of the film may conveniently contain any of the additives conventionally employed in the manufacture of polymeric films. Thus, agents such as cross-linking agents, dyes, pigments, voiding agents, lubricants, anti-oxidants, radical scavengers, UV absorbers, thermal stabilisers, anti-blocking agents, surface active agents, slip aids, optical brighteners, gloss improvers, prodegradants, viscosity modifiers and dispersion stabilisers may be incorporated as appropriate. In particular the composite film may comprise a particulate filler which may, for example, be a particulate inorganic filler or an incompatible resin filler or a mixture of two or more such fillers. Such fillers are well-known in the art.

Particulate inorganic fillers include conventional inorganic fillers, and particularly metal or metalloid oxides, such as alumina, talc, silica (especially precipitated or diatomaceous silica and silica gels) and titania, calcined china clay and alkaline metal salts, such as the carbonates and sulphates of calcium and barium. The particulate inorganic fillers may be of the voiding or non-voiding type. Suitable particulate inorganic fillers may be homogeneous and consist essentially of a single filler material or compound, such as titanium dioxide or barium sulphate alone. Alternatively, at least a proportion of the filler may be heterogeneous, the primary filler material being associated with an additional modifying component. For example, the primary filler particle may be treated with a surface modifier, such as a pigment, soap, surfactant coupling agent or other modifier to promote or alter the degree to which the filler is compatible with the polymer layer. Preferred particulate inorganic fillers include titanium dioxide and silica. The inorganic filler should be finely-divided, and the volume distributed median particle diameter (equivalent spherical diameter corresponding to 50% of the volume of all the particles, read on the cumulative distribution curve relating volume % to the diameter of the particles - often referred to as the "D(v,0.5)" value) thereof is preferably in the range from 0.01 to 10 µm, more preferably 0.01 to 5 µm, more preferably 0.05 to 1.5 µm, and particularly 0.15 to 1.2 µm. Preferably at least 90%, more preferably at least 95% by volume of the inorganic filler particles are within the range of the volume distributed median particle diameter ± 0.8 µm, and particularly ± 0.5 µm. Particle size of the filler particles may be measured by electron microscope, coulter counter, sedimentation analysis and static or dynamic light scattering. Techniques based on laser light diffraction are preferred. The median particle size may be determined by plotting a cumulative distribution curve representing the percentage of particle volume below chosen particle sizes and measuring the 50th percentile.

In a preferred embodiment, the heat-sealable layer comprises at least about 0.5%, and no more than about 5% by weight (based on the total weight of the layer), preferably no more than about 2% by weight, and preferably no more than about 1.5% weight, of inorganic filler particles. The filler particles are selected from the filler particles referred to hereinabove, and are preferably selected from silica and talc, preferably silica. In this embodiment, the windability of the film (i.e., the absence of blocking or sticking when the film is would up into a roll) is improved, without an unacceptable increase in haze or deterioration of other optical properties.

Thermoformability can be further improved by incorporating a plasticizer, typically in the substrate layer. Suitable plasticizers include aromatic dicarboxylic acid esters such as dimethyl phthalate, diethyl phthalate, di-n-butyl phthalate, di-n-hexyl phthalate, di-n-heptyl phthalate, di-2-ethylhexyl phthalate, di-n-octyl phthalate, di-n-nonyl phthalate, diethyl isophthalate, di-n-butyl isophthalate, di-2-ethylhexyl isophthalate, diethyl terephthalate, di-n-butyl terephthalate, di-2-ethylhexyl terephthalate, etc.; phosphoric acid esters such as triethyl phosphate, tri-n-butyl phosphate, trioctyl phosphate, cresyl phosphate, etc.; sebacic acid esters such as dimethyl sebacate, diethyl sebacate, di-n-butyl sebacate, diamyl sebacate, etc.; adipic acid esters such as hexyl adipate, etc.; esters such as butyl phthalyl butyl glycolate, tributyl citrate, tetrahydrofurfuryl oleate, methyl acetyl ricinoleate, etc.; and polyethylene glycol, etc. In one embodiment, the plasticizer is selected from aromatic dicarboxylic acid esters (particularly phthalic acid esters) because they have excellent heat resistance, can significantly improve thermoformability, and are free from problems of sublimation and bleedout during film-forming process. The melting point at atmospheric pressure of the plasticizer is preferably at least 300°C or higher, more preferably at least 350°C. The content of the plasticizer in the layer is preferably 0.01 to 5 wt%, more preferably 0.05 to 2 wt% based on the weight of the polymeric material of the layer.

The components of the composition of a layer may be mixed together in a conventional manner. For example, the various components may be incorporated by mixing them with the monomeric reactants from which the layer polymer is derived, or the components may be mixed with already-formed polymer by tumble or dry blending or by compounding in an extruder, followed by cooling and, usually, comminution into granules or chips. Master batching technology may also be employed.

In one embodiment, the film of the present invention is optically clear, preferably having a % of scattered visible light (haze) of <25%, preferably <15%, <10%, preferably <8%, and particularly <6%, measured according to the standard ASTM D 1003.

In an alternative embodiment, the film is opaque and highly filled, preferably exhibiting a Transmission Optical Density (TOD) (Sakura Densitometer; type PDA 65; transmission mode) in the range from 0.1 to 2.0, more preferably 0.2 to 1.5, more preferably from 0.25 to 1.25, more preferably from 0.35 to 0.75 and particularly 0.45 to 0.65. The film is conveniently rendered opaque by incorporation into the polymer blend of an effective amount of an opacifying agent. Suitable opacifying agents include an incompatible resin filler, a particulate inorganic filler or a mixture of two or more such fillers, as hereinbefore described. The amount of filler present in a given layer is preferably in the range from 1% to 30%, more preferably 3% to 20%, particularly 4% to 15%, and especially 5% to 10% by weight, based on the weight of the layer polymer. The surface of an opaque film preferably exhibits a whiteness index, measured as herein described, in the range from 60 to 120, more preferably 80 to 110, particularly 90 to 105, and especially 95 to 100 units.

The surface of the substrate in contact with the heat-sealable layer is referred to herein as the primary side, and is referred to herein as the secondary side. The secondary side of the substrate may have thereon one or more further polymeric layers or coating materials. Any coating of the secondary side is preferably performed "in-line." The composite film of the invention is typically manufactured, stored, sold and used without any additional layers on the exposed surface of the heat-sealable layer.

In one embodiment, an additional coating on the secondary side may comprise a "slip coating" in order to improve the handling and windability of the film. A suitable slip coating may be, for instance, a discontinuous layer of an acrylic and/or methacrylic polymeric resin optionally further comprising a cross-linking agent, such as described in U.S. Pat. No. 5130189. An alternative slip coating may comprise a potassium silicate coating, for instance as disclosed in US Patent Nos. 5925428 and 5882798.

In a further embodiment, the secondary side of the substrate has disposed thereon a printable or ink-receiving layer, and optionally a primer layer (such as that disclosed in U.S. Pat. No. 5658847, EP-0429179, U.S. Pat. No. 5130189, EP-0576179 or WO-97/37849) between the substrate and the printable or ink-receiving layer in order to increase adhesion. Suitable printable or ink-receiving layers are disclosed in, for instance, EP-0696516, U.S. Pat. No. 5888635, U.S. Pat. No. 5663030, U.S. Pat. No. 4912085, U.S. Pat. No. 5082824, EP-0111819 and U.S. Pat. No. 5658847.

A preferred ink-receiving layer comprises an acrylic and/or methacrylic polymeric resin, as disclosed in U.S. Pat. No. 5130189. A preferred ink-receiving layer polymer comprises alkyl acrylate monomer units and alkyl methacrylate monomer units, preferably ethyl acrylate and alkyl methacrylate (preferably methyl methacrylate). In a preferred embodiment, the alkyl acrylate monomer units are present in a proportion from about 30 to about 65 mole % and the alkyl methacrylate monomer units are present in a proportion from about 20 to about 60 mole %. In a particularly preferred embodiment, the polymer comprises about 35 to 60 mole % ethyl acrylate, about 30 to 55 mole % methyl methacrylate and about 2 to 20 mole % methacrylamide. Such polymers are preferably applied to the substrate as an aqueous dispersion or alternatively as a solution in organic solvent. The polymer composition may be applied to an already oriented film substrate. However, application is preferably effected before or during the stretching operation(s). Where the substrate is biaxially oriented, the ink-receiving layer is preferably applied between the two stages (longitudinal and transverse) of the biaxial stretching operation.

In a further embodiment, the secondary side of the substrate has disposed thereon a gas and/or water vapour barrier layer. This layer can be achieved by lamination, extrusion coating, or solution coating. Suitable barrier layers include, but are not limited to, polyvinylidene chloride (PVdC), polyvinyl alcohol (PVOH), and ethylene vinyl alcohol (EVOH).

Formation of the composite film may also be effected by extrusion coating, where the heat-sealable layer as hereinbefore described is extruded on the surface of a pre-formed thermoformable substrate layer. In one embodiment, the pre-formed substrate layer comprises one or more further polymeric coatings as hereinbefore described.

Formation of the composite film may also be effected by solution coating, where the heat-sealable layer as hereinbefore described is applied on the surface of a pre-formed thermoformable substrate layer. The solution coating techniques include, but not limited to, forward roll coating, reverse roll coating, gravure coating, curtain coating, and slot die coating. In one embodiment, the pre-formed substrate layer comprises one or more further polymeric coatings as hereinbefore described.

In one embodiment, the composite film consists of a substrate and a heat-sealable layer, as defined herein, that is to say that no other layers are present in the film. In an alternative embodiment, the composite film consists of a substrate, a heat-sealable layer, and on the secondary surface of the substrate a printable or ink-receiving layer, and optionally an adhesion-promoting primer layer between the substrate and the printable or ink-receiving layer.

The composite film of the present invention may also be used as "cook-in" packaging, as described herein. Such packaging may take the form of a cook-in bag or pouch wherein the composite film entirely surrounds the food product and in that sense acts as the sole packaging means. In this embodiment, sealing is effected by heat-sealing a first portion of the film to a second portion of the film. Such seals are effected by conventional techniques and include "fin seals" and "overlap seals", and are typically fin seals. The heat-seal bond is typically formed at temperatures in the range of about 110 to about 150°C.

Other types of "cook-in" packaging include a thermoformable receiving film in association with a separate covering film, which may also be thermoformable. The food product is disposed between the two films, wherein at least one of the contacting surfaces of the receiving and covering films is a heat-sealable surface. A thermoformable and heat-sealable composite film as described herein may be used in such an assembly as the receiving film and/or covering film. In one embodiment, a thermoformable receiving film as described herein is used with a covering film which is a thermoplastic polymeric film, preferably polyester, which is optionally heat-sealable and typically exhibits little or no shrinkage (preferably less than 7%, preferably less than 5%, preferably less than 3%, in the machine and/or transverse dimensions, measured as described later herein).

Vacuum skin packages using a composite film and dual-ovenable tray as hereinbefore described can be formed according to conventional techniques and using commercially available equipment. Figure 2 shows a typical such package 20. A receptacle such as tray 22, preferably APET/CPET co-extruded tray, is filled with food 24. The opening of the tray is aligned with the heat-sealable side of the composite film. Both the receptacle and the film comply with the requirements of paragraph h(1) of 21 CFR § 177.1630. This paragraph requires that the food contact surface, when exposed to distilled water at 250°F (121°C) for 2 hours, yields chloroform-soluble extractives not to exceed 0.02 mg/in² (0.0031mg/cm²) of food contact surface exposed to the solvent; and that the food contact surface, when exposed to n-heptane at 150°F (66°C) for 2 hours, yields chloroform-soluble extractives not to exceed 0.02 mg/in² (0.0031mg/cm²) of food contact surface exposed to the solvent.

As shown in better detail in Figure 3, the tray preferably includes a flange 26 which forms a heat-sealing region 27 adapted to contact and form a seal with the heat-sealable layer 28 of the polymeric composite film 30. Bonding between the flange 26 of the dual-ovenable tray 22 and sealable layer 28 of the composite film 30 is made by the application of heat and pressure, thereby forming a sealed package. Vacuum is applied during the sealing process to evacuate the package and draw the composite film to conform onto the surface of the food content 24. Typically, the heat-seal bond is effected within a temperature range of 120 to about 180°C, and the residence time required to effect the heat-seal bond is from about 0.1 to about 10 seconds. The sealing plate pressure is generally from about 1 to 10 bars (10⁵ to 10⁶ Pa). The packaged food product is typically then cooled to a temperature between about -7 and 5 °C in a refrigerator or freezer, and kept at the desired temperature during storage and transportation to the wholesaler, retailer or consumer until the food product is ready to be cooked and consumed.

The following test methods may be used to determine certain properties of the polymeric film:
(i) Wide angle haze is measured using a Hazegard System XL-211, according to ASTM D 1003-61.
(ii) Whiteness index is measured using a Colorgard System 2000, Model/45 (manufactured by Pacific Scientific) based on the principles described in ASTM D313.
(iii) Heat-seal strength is measured as follows. The film is sealed, by means of the heat-sealable layer, to a typical APET/CPET tray (obtained from Faerch A/S, Denmark) using a Microseal PA 201 (obtained from Packaging Automation Ltd, England) tray sealer at a temperature of 180°C, and pressure of 80 psi (0.55 N/mm²) for two seconds. Strips (25 mm wide) of the sealed film and tray are cut out at 90° to the seal, and the load required to pull the seal apart measured using an Instron operating at a crosshead speed of 0.25m/minute. The procedure is generally repeated 4 times, and a mean value of 5 results calculated.
(iv) Heat-seal strength of the composite film to itself to itself is measured by positioning together and heating the heat-sealable layers of two samples of the film at 160°C for 0.5 second under a pressure of 80 psi (0.55 N/mm²). The sealed film is cooled to room temperature, and the sealed composite cut into 25mm wide strips. The heat-seal strength is determined by measuring the force required under linear tension per unit width of seal to peel the layers of the film apart at a constant speed of 0.25m/minute.
(v) Hot-tack adhesion is measured according to ASTM F1921-98 ("Standard Test Method for Hot Seal Strength (Hot Tack) of Thermoplastic Polymers and Blends Comprising the Sealing Surfaces of Flexible Webs"), using a Davinor J&B hot tack tester. Strips of the composite film (25 mm wide) are sealed in the machine to an APET/CPET surface (obtained from Faerch A/S, Denmark) at defined conditions of seal temperature and force and the resulting seal strength is measured at a given peel speed at defined times after the seal has been made. In the present invention, the seal temperature is 150°C; the seal pressure is 1N/mm²; the seal time is 0.5 seconds; the cool time (i.e., the time between making the seal and performing the seal strength measurement) is 0.1 seconds; and the peel speed is 120 mm/s.
(vi) Shrinkage is measured by placing the sample in an oven at a temperature of 190°C for 5 minutes and determining the average % shrinkage in both the machine and transverse directions, based on five film samples.
(vii) Ultimate tensile strength is measured according to ASTM D882-88, taking the average of the values in the longitudinal and transverse dimensions of the film.
(viii) Thermoformability can be inferred from the stress-strain curve above the glass transition temperature of the polymer, with reference to the parameters of Young's modulus, yield stress, and post-yield modulus, and particularly with reference to yield stress, and post-yield modulus.

The Young's modulus is a measure of the stiffness of a given material. The Young's modulus represents the rate of change of stress with strain and can be determined experimentally from the initial slope of the stress-strain curve during tensile testing. Thus, the Young's modulus is the ratio of the tensile strength to the elongation below the yield stress. The value quoted herein is calculated as the highest ratio between 0 and 10% elongation.

The yield stress may be determined from the stress-strain curve exhibited during tensile testing, and represents the stress at which permanent deformation of a stressed specimen begins to take place, i.e., the tensile stress above which the material elongates beyond recovery. The value quoted herein is calculated as the stress at which the tensile to elongation ratio has decreased by 60% from its highest value (i.e., the Young's modulus). Desirably, the yield stress should be as close to zero as possible at the processing temperature of the thermoforming process.

The post-yield modulus is a measure of strain hardening of a given material and is the slope of the stress-strain curve when a material is strained beyond the yield point. An increasing stress is required to produce additional deformation. Thus, the post-yield modulus coefficient is the ratio of the tensile strength to the elongation above the yield stress (and naturally below the elongation at break). The value quoted herein is calculated as the average ratio between an elongation (%) range from E1 to E2 where (i) 10 ≤ (E2-E1) ≤ 20; (ii) 60 ≤ E2 ≤120; and (iii) 50 ≤E1 ≤ 100 (which range is typically between 60 and 80%, but in some cases between 40 and 60% or 50 and 60% or 100 and 120%, depending on the shape of the curve). Desirably, the post-yield modulus should be as close to zero as possible in the processing region of interest, i.e., the strain and temperature regions utilized in the thermoforming process.

The Young's modulus, the yield stress and the post-yield modulus coefficient are measured at various temperatures: 25°C; Tg; Tg+50°C; and Tg+100°C. Using a straight edge and a calibrated sample cutter (10 mm ±0.5mm in the middle of the strip), five dog-bone shaped strips (500mm in length) of the film are cut along the machine direction. The same procedure is repeated for the transverse direction. Each sample is tested using an Instron model 3111 materials test machine, using pneumatic action grips with rubber jaw faces and a hot box. The temperature is varied as required. The crosshead speed (rate of separation) is 25 mm/minute. The strain rate is 50%. The elongation is accurately measured by video-recording the distance between two black spots premarked on the strip.
(ix) Glass transition temperature is measured by Differential Scanning Calorimetry (DSC). A 10mg polymer specimen taken from the film is dried for 12 hours under vacuum at 80°C. The dried specimen is heated at 290°C for 2 minutes and then quenched onto a cold block. The quenched specimen is heated from 0°C to 290°C at a rate of 20°C/minute using a Perkin-Elmer DSC7B Differential Scanning Calorimeter. The calorimeter is calibrated at a heating rate of 20°C/minute, so cooling temperatures are corrected by adding 3.9°C to the computer-generated results.
(x) The crystallinity percentage is measured by Differential Scanning Calorimetry. A 5mg sample taken from the film is heated from 0 to 300°C at 80°C/minute on the Perkin Elmer DSC7B. The crystallinity percentage assumes that crystallinity is present in all the samples.

The ovenable meal can achieve the cooked internal temperatures of meats, fish etc. in shorter times in comparison to conventional cook times. Surprisingly meats, fish etc. cooked in packages according to the invention are frequently juicier in comparison to conventional oven- or microwave-cooked meals.

## Claims

1. An ovenable vacuum skin packaged sealed container comprising a receptacle (22) containing a food product (24) and a lid heat-sealed to the receptacle, said lid formed from a composite film (30) that comprises:
(i) a thermoformable substrate layer (29) comprising a first copolyester material comprising units of terephthalic acid, azelaic acid, ethylene glycol and diethylene glycol; and
(ii) on a surface of the substrate layer (29), a heat-sealable layer (28) comprising a second copolyester material, the second copolyester material being different from the first copolyester material;
wherein
i. the receptacle (22) comprises on a surface thereof a sealing region (27) adapted to contact and form a seal with the heat-sealable layer of the lid; and
ii. both the receptacle (22) and the lid comply with the requirements of paragraph h(1) of 21 CFR § 177.1630; and
wherein the lid is conformed to the surface of the food product.

2. The ovenable vacuum skin packaged sealed container according to claim 1, wherein the thermoformable substrate layer (29) and the heat-sealable layer (28) are co-extruded film layers.

3. The ovenable vacuum skin packaged sealed container according to claim 1 or 2, wherein the thermoformable substrate layer (29) and the heat-sealable layer (28) are produced by extrusion coating.

4. The ovenable vacuum skin packaged sealed container according to claim 1 or 2, wherein the thermoformable substrate layer (29) and the heat-sealable layer (28) are produced by solution coating.

5. The ovenable vacuum skin packaged sealed container according to any preceding claim, wherein the thermoformable substrate layer (29) includes a wax.

6. The ovenable vacuum skin packaged sealed container according to any preceding claim, further comprising at least one additional layer coated on a surface of the substrate layer (29).

7. The ovenable vacuum skin packaged sealed container according to claim 6, wherein the at least one additional layer is a printed layer.

8. The ovenable vacuum skin packaged sealed container according to any preceding claim, further comprising at least one layer that improves the printing or barrier characteristics of the thermoformable composite polymeric film cover (30).

9. The ovenable vacuum skin packaged sealed container according to any preceding claim, further comprising at least one protective layer and at least one gloss-improving layer.

10. The ovenable vacuum skin packaged sealed container according to any preceding claim, wherein the sealing region comprises a substantially flat flange (26).

11. The ovenable packaged sealed container according to any preceding claim, wherein the formed seal is stable at a temperature of about 30°F (-1°C) and remains stable when exposed to a temperature of at least about 400°F (204°C) for at least two hours.

12. The ovenable vacuum skin packaged sealed container according to claim 1, wherein the composite film (30) further comprises a barrier layer.

13. The ovenable vacuum skin packaged sealed container according to claim 1 or 12 wherein the food product is an ovenable meal.

## Patentansprüche

1. Ofengeeigneter, vakuumfolienverpackter, versiegelter Behälter, der ein Nahrungsmittelprodukt (24) enthaltendes Gefäß (22) und einen heißversiegelten Deckel am Gefäß umfasst, wobei der Deckel aus einem Verbundfilm (30) gebildet ist, der umfasst:
(i) eine wärmeformbare Substratschicht (29), die ein erstes Copolyestermaterial umfasst, das Einheiten von Terephthalsäure, Azelainsäure, Ethylenglycol und Diethylenglycol umfasst; und
(ii) auf einer Oberfläche der Substratschicht (29) eine heißversiegelbare Schicht (28), die ein zweites Copolyestermaterial umfasst, wobei das zweite Copolyestermaterial ein anderes als das erste Copolyestermaterial ist;
wobei
i. das Gefäß (22) auf einer Oberfläche derselben einen Versiegelungsbereich (27) umfasst, der dafür ausgelegt ist, mit der heißversiegelbaren Schicht des Deckels einen Kontakt herzustellen und mit dieser eine Versiegelung zu bilden; und
ii. sowohl das Gefäß (22) als auch der Deckel die Anforderungen des Paragraphen h(1) von 21 CFR § 177.1630 erfüllen; und
wobei sich der Deckel an die Oberfläche des Nahrungsmittelprodukts anpasst.

2. Ofengeeigneter, vakuumfolienverpackter, versiegelter Behälter nach Anspruch 1, wobei die wärmeformbare Substratschicht (29) und die heißversiegelbare Schicht (28) koextrudierte Filmschichten sind.

3. Ofengeeigneter, vakuumfolienverpackter, versiegelter Behälter nach Anspruch 1 oder 2, wobei die wärmeformbare Substratschicht (29) und die heißversiegelbare Schicht (28) durch Extrusionsbeschichtung hergestellt sind.

4. Ofengeeigneter, vakuumfolienverpackter, versiegelter Behälter nach Anspruch 1 oder 2, wobei die wärmeformbare Substratschicht (29) und die heißversiegelbare Schicht (28) durch Lösungsbeschichtung hergestellt sind.

5. Ofengeeigneter, vakuumfolienverpackter, versiegelter Behälter nach einem vorhergehenden Anspruch, wobei die wärmeformbare Substratschicht (29) Wachs enthält.

6. Ofengeeigneter, vakuumfolienverpackter, versiegelter Behälter nach einem vorhergehenden Anspruch, der ferner mindestens eine zusätzliche Schicht umfasst, die auf einer Oberfläche der Substratschicht (29) aufgetragen ist.

7. Ofengeeigneter, vakuumfolienverpackter, versiegelter Behälter nach Anspruch 6, wobei die mindestens eine zusätzliche Schicht eine Druckschicht ist.

8. Ofengeeigneter, vakuumfolienverpackter, versiegelter Behälter nach einem vorhergehenden Anspruch, der ferner mindestens eine Schicht umfasst, die die Druck- oder Barriereeigenschaften der Abdeckung verbessert, die aus dem wärmeformbaren, Polymerverbundfilm (30) besteht.

9. Ofengeeigneter, vakuumfolienverpackter, versiegelter Behälter nach einem vorhergehenden Anspruch, der ferner mindestens eine Schutzschicht und mindestens eine den Glanz verbessernde Schicht umfasst.

10. Ofengeeigneter, vakuumfolienverpackter, versiegelter Behälter nach einem vorhergehenden Anspruch, wobei der Versiegelungsbereich eine im Wesentlichen flache Kante (26) umfasst.

11. Ofengeeigneter, verpackter, versiegelter Behälter nach einem vorhergehenden Anspruch, wobei die gebildete Versiegelung stabil bei einer Temperatur von etwa 30 °F (-1 °C) ist und stabil bleibt, wenn sie einer Temperatur von mindestens etwa 400 °F (204 °C) während einer Zeitdauer von mindestens zwei Stunden ausgesetzt ist.

12. Ofengeeigneter, vakuumfolienverpackter, versiegelter Behälter nach Anspruch 1, wobei der Verbundfilm (30) ferner eine Barriereschicht umfasst.

13. Ofengeeigneter, vakuumfolienverpackter, versiegelter Behälter nach Anspruch 1 oder 12, wobei das Nahrungsmittelprodukt eine ofengeeignete Mahlzeit ist.

## Revendications

1. Récipient scellé emballé avec une peau sous vide allant au four comprenant un réceptacle (22) contenant un produit alimentaire (24) et un couvercle thermoscellé sur le réceptacle, ledit couvercle étant formé d'un film composite (30) qui comprend :
(i) une couche de substrat thermoformable (29) comprenant un premier matériau de copolyester comprenant des motifs d'acide téréphtalique, d'acide azélaïque, d'éthylène glycol et de diéthylène glycol ; et
(ii) sur une surface de la couche de substrat (29), une couche thermoscellable (28) comprenant un deuxième matériau de copolyester, le deuxième matériau de copolyester étant différent du premier matériau de copolyester ;
dans lequel
i. le réceptacle (22) comprend, sur une surface de celui-ci, une région de scellement (27) adaptée pour venir en contact et former un joint d'étanchéité avec la couche thermoscellable du couvercle ; et
ii. le réceptacle (22) et le couvercle sont conformes aux exigences du paragraphe h(1) de 21 CFR § 177.1630 ; et
dans lequel le couvercle épouse la surface du produit alimentaire.

2. Récipient scellé emballé avec une peau sous vide allant au four selon la revendication 1, dans lequel la couche de substrat thermoformable (29) et la couche thermoscellable (28) sont des couches de film coextrudées.

3. Récipient scellé emballé avec une peau sous vide allant au four selon la revendication 1 ou 2, dans lequel la couche de substrat thermoformable (29) et la couche thermoscellable (28) sont produites par enduction par extrusion.

4. Récipient scellé emballé avec une peau sous vide allant au four selon la revendication 1 ou 2, dans lequel la couche de substrat thermoformable (29) et la couche thermoscellable (28) sont produites par enduction en solution.

5. Récipient scellé emballé avec une peau sous vide allant au four selon l'une quelconque des revendications précédentes, dans lequel la couche de substrat thermoformable (29) comprend une cire.

6. Récipient scellé emballé avec une peau sous vide allant au four selon l'une quelconque des revendications précédentes, comprenant en outre au moins une couche supplémentaire enduite sur une surface de la couche de substrat (29).

7. Récipient scellé emballé avec une peau sous vide allant au four selon la revendication 6, dans lequel l'au moins une couche supplémentaire est une couche imprimée.

8. Récipient scellé emballé avec une peau sous vide allant au four selon l'une quelconque des revendications précédentes, comprenant en outre au moins une couche qui améliore les caractéristiques d'impression ou de barrière de la couverture de film polymère composite thermoformable composite (30).

9. Récipient scellé emballé avec une peau sous vide allant au four selon l'une quelconque des revendications précédentes, comprenant en outre au moins une couche protectrice et au moins une couche améliorant le brillant.

10. Récipient scellé emballé avec une peau sous vide allant au four selon l'une quelconque des revendications précédentes, dans lequel la région de scellement comprend une bride sensiblement plate (26).

11. Récipient scellé emballé allant au four selon l'une quelconque des revendications précédentes, dans lequel le joint d'étanchéité formé est stable à une température d'environ 30 °F (-1 °C) et reste stable lorsqu'il est exposé à une température d'au moins environ 400 °F (204 °C) pendant au moins deux heures.

12. Récipient scellé emballé avec une peau sous vide allant au four selon la revendication 1, dans lequel le film composite (30) comprend en outre une couche de barrière.

13. Récipient scellé emballé avec une peau sous vide allant au four selon la revendication 1 ou 12, dans lequel le produit alimentaire est un repas allant au four.
